# EUROPEAN PATENT APPLICATION

(11) **EP 4 822 875 A1**
(43) Date of publication of application: **14.10.2026**
(21) Application number: 26169784.1
(22) Date of filing: 31.03.2026
(51) Int. Cl.: H01M 50/46, H01M 10/04, H01M 50/457, H01M 50/474, H01M 50/489, H01M 50/491

(54) **POROUS BARRIER LAYER SUPPORTING TAPES FOR USE IN ENERGY STORAGE DEVICES, AND METHODS THEREOF**

(30) Priority: 09.04.2025 US 202563786077 P
(71) Applicant: Tesla, Inc., Austin, TX 78725 (US)
(72) Inventor: YANG, Xiaoyun, Texas, 78725 (US); PEI, Allen Yee-Lun, Austin, 78725 (US); MUTHUKUMAR, Siva Ram Kumar, Texas, 78725 (US)
(74) Representative: Zacco Sweden AB

(57) **Abstract**

A porous barrier layer supporting tape for use in energy storage devices comprising a porous adhesive layer and a porous substrate, and methods thereof is disclosed. Porous barrier layer supporting tapes may allow active use of the entire electrode compared to conventional energy storage devices where sections of the electrode are typically rendered inactive by the impermeable barrier layer supporting tape. The porous barrier layer supporting tapes may further provide additional support to prevent short circuiting and provide protection from wearrelated puncture over the life of the energy storage device.

## Description

### REFERENCE TO PRIORITY APPLICATIONS

This application claims the benefit of priority to U.S. Patent Application No. 63/786,077, entitled "POROUS BARRIER LAYER SUPPORTING TAPES FOR USE IN ENERGY STORAGE DEVICES," filed on April 9, 2025.

### BACKGROUND

Punctures and short circuiting due to separator wear-related issues are typical failures known to occur over the life of an energy storage device. Currently, barrier layer supporting tapes provide protection against short circuiting during usage or cycling. However, the current barrier layer supporting tapes limit active use of the entire electrode, prevent radial gas and electrolyte transport, and cause local negative-to-positive capacity ratio violation (e.g., low negative-to-positive capacity ratio), resulting in metal plating (e.g., lithium plating).

As such, energy storage devices with an improved barrier layer supporting tapes are desired.

### SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In one aspect, an electrode assembly is described. The electrode assembly includes: a first electrode, wherein the first electrode comprises an electrode leading edge; a second electrode; and a porous barrier layer supporting tape positioned between the first electrode and the second electrode, wherein the porous barrier layer supporting tape includes: a porous adhesive layer; and a porous substrate; wherein the porous adhesive layer is disposed directly over the porous substrate.

In some embodiments, the porous barrier layer supporting tape is disposed over the electrode leading edge. In some embodiments, the porous barrier layer supporting tape comprises an air permeability rate of at most about 300 s/100 cc. In some embodiments, the porous barrier layer supporting tape comprises a puncture strength of about 7-8.5 N. In some embodiments, the porous barrier layer supporting tape comprises a peel strength of at least about 200 N/m. In some embodiments, the porous barrier layer supporting tape further comprises a porous intermediary layer and a porous layer. In some embodiments, the porous adhesive layer is disposed over the porous intermediary layer and the porous intermediary layer is disposed over the porous substrate. In some embodiments, the porous layer is disposed over the porous substrate opposite a side of the porous intermediary layer and the porous adhesive layer.

In some embodiments, the porous adhesive layer includes an adhesive material selected from the group consisting of acrylic, silicon rubber, acrylamide, polyolefin, polyolefin-based resins, polyolefin-based resins with polar group modifications, or combinations thereof. In some embodiments, the porous adhesive layer is a non-continuous film. In some embodiments, the porous adhesive layer comprises a porous adhesive layer thickness of about 1 µm to about 5 µm. In some embodiments, the porous substrate comprises a porous substrate thickness of about 15 µm to about 20 µm. In some embodiments, the porous barrier layer supporting tape comprises a wear resistance of at least about 1000 compression cycles.

In some embodiments, the electrode assembly further includes a separator disposed between the porous barrier layer supporting tape and the first electrode. In some embodiments, the separator comprises a porosity of about 25-65%. In some embodiments, the separator comprises a separator thickness of about 5-50 µm.

In another aspect, a wound electrode assembly is described. The wound electrode assembly includes an electrode assembly including a first electrode, a second electrode, and a porous barrier layer supporting tape, wherein the first electrode, the second electrode and the porous barrier layer supporting tape are wound about a central axis to form an inner diameter surface surrounding a cylindrical void.

In some embodiments, the porous barrier layer supporting tape is physically contacting the first electrode and the second electrode.

In another aspect, an energy storage device is described. The energy storage device includes: an electrode assembly, including: a first electrode comprising an electrode leading edge; a second electrode; and a porous barrier layer supporting tape positioned between the first electrode and the second electrode; wherein the porous barrier layer supporting tape comprises a porous adhesive layer and a porous substrate; wherein the porous adhesive layer is disposed directly over the porous substrate; wherein the porous barrier layer supporting tape is disposed over and extends beyond the electrode leading edge; and wherein the porous barrier layer supporting tape comprises an air permeability rate of at most about 300 s/100 cc, a puncture strength of about 7-8.5 N and a peel strength of at least about 200 N/m; an electrolyte; and a housing, wherein the electrode assembly and the electrolyte are disposed within the housing.

In another aspect, an energy storage device is described. The energy storage device includes an electrode assembly including a first electrode including an electrode leading edge, a second electrode, and a porous barrier layer supporting tape, wherein the porous barrier layer supporting tape is disposed over and extends beyond the electrode leading edge, an electrolyte, and a housing, wherein the electrode assembly and the electrolyte are disposed within the housing.

In another aspect, a method of forming an electrode assembly is described. The method includes: disposing a porous barrier layer supporting tape over an electrode leading edge of a first electrode, wherein the porous barrier layer supporting tape includes a porous adhesive layer and a porous substrate, wherein the porous adhesive layer is disposed directly over the porous substrate, and disposing a second electrode over the porous barrier layer supporting tape such that the porous barrier layer supporting tape is positioned between the first electrode and the second electrode.

In some embodiments, the method further includes disposing the porous adhesive layer over the porous substrate to form the porous barrier layer supporting tape. In some embodiments, the porous substrate includes a partial adhesive coating, wherein disposing the porous adhesive layer over the porous substrate includes a deposition process selected from the group consisting of gravure, flexographic coating, slot die coating, spray adhesive coating, ink jet adhesive coating, and combinations thereof. In some embodiments, disposing the porous adhesive layer over the porous substrate includes a deposition process selected from the group consisting of direct rotogravure, indirect rotogravure, flexographic coating, slot die coating, comma coating, spray coating, ink-jet coating, and combinations thereof.

### BRIEF DESCRIPTION OF THE DRAWINGS

FIG. 1A is a schematic illustration showing a porous barrier layer supporting tape, according to some embodiments.
FIG. 1B is a schematic illustration showing a porous barrier layer supporting tape including multiple porous layers, according to some embodiments.
FIG. 2 is a schematic illustration showing a porous barrier layer supporting tape including a porous adhesive layer disposed over a porous substrate.
FIG. 3 is an image showing a porous adhesive layer, according to some embodiments.
FIG. 4A is a schematic illustration showing a porous barrier layer supporting tape disposed over a separator, according to some embodiments.
FIG. 4B is another schematic illustration showing a porous barrier layer supporting tape disposed over a separator, according to some embodiments.
FIG. 5A is a schematic illustration showing an electrode assembly including a porous barrier layer supporting tapes, according to some embodiments.
FIG. 5B is another schematic illustration showing an electrode assembly including a porous barrier layer supporting tapes, according to some embodiments.
FIG. 6 is a cross-sectional top-view image of a portion of a rolled electrode assembly magnified on a leading edge of the cathode, according to some embodiments.
FIG. 7 is a flow chart depicting a process of forming an electrode assembly, according to some embodiments.

It will be clearly understood, though, that the examples and figures are for illustrative purposes only, and are not necessarily restrictive of the scope of the present invention.

### DETAILED DESCRIPTION

Although certain preferred embodiments and examples are disclosed below, the inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations, in turn, in a manner that may be helpful in understanding certain embodiments; however, the order of description should not be construed to imply that these operations are order-dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

A porous barrier layer supporting tape that may be used in energy storage devices is described. Typically, an energy storage device includes an electrode assembly, an electrolyte and a housing, wherein the electrode assembly and the electrolyte are disposed within the housing. The electrode assembly generally includes a cathode, an anode and a separator disposed between the cathode and anode. Conventionally, in addition to protecting the device from short circuiting, impermeable barrier layer supporting tapes may be used in conjunction with a separator to facilitate electrolyte and ion transport. However, an impermeable barrier layer supporting tapes cover a significant portion of the electrode, rendering such area, portion or section of the electrode as inactive (e.g., a blocked electrode), resulting in energy loss (e.g., 0.4-1%). The blocked electrode may lead to local negative-to-positive capacity ratio violation (e.g., less than 1 negative-to-positive capacity ratio), causing safety and reliability issues. The impermeable barrier layer supporting tapes may further prevent radial gas (e.g., gas trapping) and electrolyte transport to flow into a core of the electrode assembly and energy storage device, resulting in metal plating (e.g., lithium plating).

In contrast, porous barrier layer supporting tapes allow active use of the blocked electrode, increasing energy efficiency, improving local negative-to-positive capacity ratios, reducing electrolyte filling time, and increasing electrolyte flow and diffusion during cycling, and preventing any salt imbalance from electrolyte pumping. Furthermore, the permeability of the porous barrier layer supporting tapes allow for efficient ion transport and gas permeability similar or better to that of a typical separator and simultaneously have mechanical characteristics similar or better to that of a conventional barrier layer supporting tape. Thus, the porous barrier layer supporting tapes may have combined abilities of a separator and a barrier layer supporting tape.

### Porous Barrier Layer Supporting Tapes

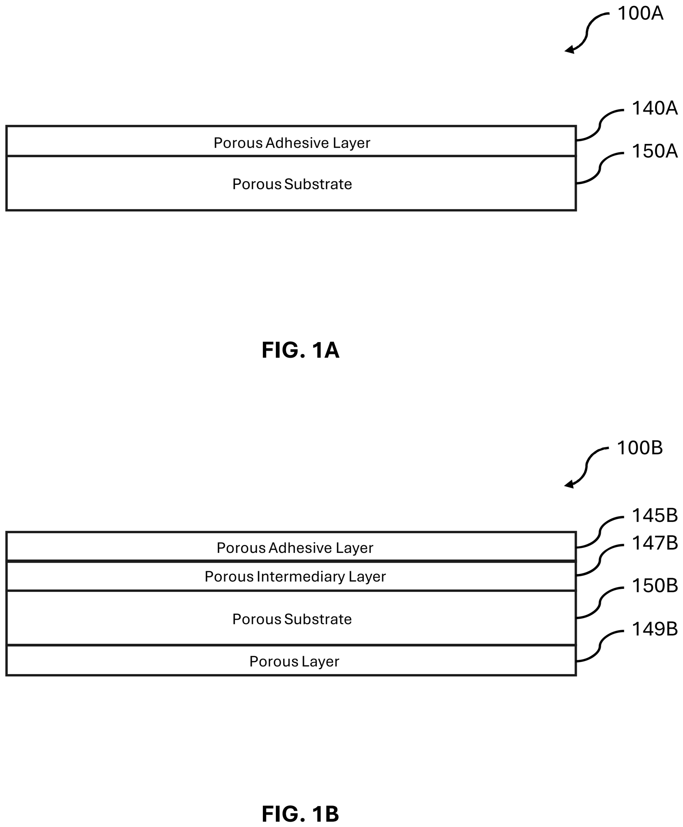

FIG. 1A is a schematic illustration showing a porous barrier layer supporting tape 100A. As shown in FIG. 1A, the porous barrier layer supporting tape 100A includes a porous adhesive layer 140A disposed over the porous substrate 150A (e.g., disposed over a length side).

FIG. 1B is a schematic illustration showing a porous barrier layer supporting tape 100B including multiple porous layers. The porous barrier layer supporting tape 100B includes a porous adhesive layer 145B disposed over a porous intermediary layer 147B. The porous intermediary layer 147B is further disposed over a porous substrate 150B. A porous layer 149B is disposed over the porous substrate 150B on a side opposite of the porous intermediary layer 147B and porous adhesive layer 145B.

In some embodiments, the porous adhesive layer, the porous intermediary layer, the porous layer and porous substrate may be disposed over one another in any configuration. In some embodiments, the porous intermediary layer is positioned between the porous adhesive layer and the porous substrate. In some embodiments, the porous adhesive layer may be disposed on either length side of the porous substrate. In some embodiments, the porous adhesive layer comprises an adhesive material. In some embodiments, the adhesive material may be selected from the group consisting of acrylic, silicon rubber, acrylamide, polyolefin, polyolefin-based resins, polyolefin-based resins with polar group modifications, or combinations thereof. In some embodiments, the porous adhesive layer adheres at room temperature. In some embodiments, the porous adhesive layer may be activated when in contact with an electrolyte solvent.

In some embodiments, the porous intermediary layer may be selected from the group consisting of a ceramic coating, ceramic coating with wet adhesion, porous adhesive layer, or combinations thereof. In some embodiments, the porous layer may be selected from the group consisting of a ceramic coating, porous adhesive layer, or combinations thereof. In some embodiments, the porous layer may include a ceramic coating. In some embodiments, the ceramic coating may be selected from the group consisting of aluminum oxide, boehmite, or combinations thereof. In some embodiments, the ceramic coating is porous and/or comprises pores (e.g., a porous ceramic coating). In some embodiments, the porous intermediary layer may include a ceramic coating with wet adhesion. In some embodiments, the porous intermediary layer adheres at a temperature higher than room temperature.

In some embodiments, the porous adhesive layer is a pressure sensitive adhesive (PSA). In some embodiments, the porous adhesive layer is a hot melt-type adhesive. In some embodiments, the PSA may be formed or fabricated by patterning a solid and dense adhesive coating over a porous substrate such that the patterning leaves uncoated sections or areas of the porous substrate for air permeability. In some embodiments, the patterning may be a grid of dots, lines, or any other form or shape covering less than 100% of the porous substrate. In some embodiments, a hot-melt type adhesive may be formed or fabricated by dispersing, emulsifying, or emulsion-polymerizing an adhesive resin into an adhesive coating fluid and coated over a porous substrate. In some embodiments, the adhesive coating fluid may include a primary particle size large enough such that a dried layer of the adhesive coating (e.g., with thicknesses of about 0.5-5 µm) have incomplete coverage of a surface of the porous substrate. For example, monodispersed particles from the emulsion may have a particle size of about 1 µm and coated over the porous substrate to a dried thickness of about 0.75 µm, resulting in a part of the porous substrate that is uncoated and not blocked due to an insufficient amount of coating being available to cover the surface of the porous substrate. In some embodiments, the porous substrate is partially coated.

In some embodiments, the porous substrate may be coated by various adhesive coating systems (e.g., engraved roll, transfer roller, nozzle). In some embodiments, adhesive coating methods to achieve partial adhesive coating of the porous substrate may be selected from the group consisting of gravure (e.g., designing an engraved roll such that a desired pattern is coated, leaving open spaces, pores, or voids), flexographic coating (e.g., designing a transfer roller such that a desired pattern is coated), slot die coating (e.g., designing a shim for a nozzle such that parts of the nozzle are blocked, leading to strips or streaks of adhesive coating in a machine direction), spray adhesive coating (e.g., designing a nozzle and process such that droplets of sprayed adhesive coating do not fully cover a surface of the porous substrate), ink jet adhesive coating (e.g., designing a printing pattern such that a desired pattern is coated), or combinations thereof. In some embodiments, the porous adhesive layer may be disposed over or deposited on the porous substrate. In some embodiments, disposing or depositing the porous adhesive layer on the porous substrate may comprise a deposition method selected from the group consisting of direct rotogravure, indirect rotogravure, flexographic coating, slot die coating, comma coating, spray coating, ink-jet coating, or combinations thereof.

In some embodiments, the porous substrate comprises a substrate material. In some embodiments, the substrate material may be selected from the group consisting of acrylic, silicon rubber, acrylamide, polyolefin, polyolefin-based resins, polyolefin-based resins with polar group modifications, or combinations thereof. In some embodiments, the porous substrate comprises a polymer material. In some embodiments, the polymer material is selected from the group consisting of polyimide, polyethylene, polypropylene, or combinations thereof.

A porous substrate may be formed or fabricated by melting a polymer material and mixing the polymer material with an oil (e.g., white oil, mineral oil) to form an oiled polymer mixture. The oiled polymer mixture may be extruded to form a thick film where the thick film is stretched into a thinner film. The thinner film may be mixed with a solvent that rinses away the oil (e.g., white oil) to form spaces, pores or voids in the porous substrate.

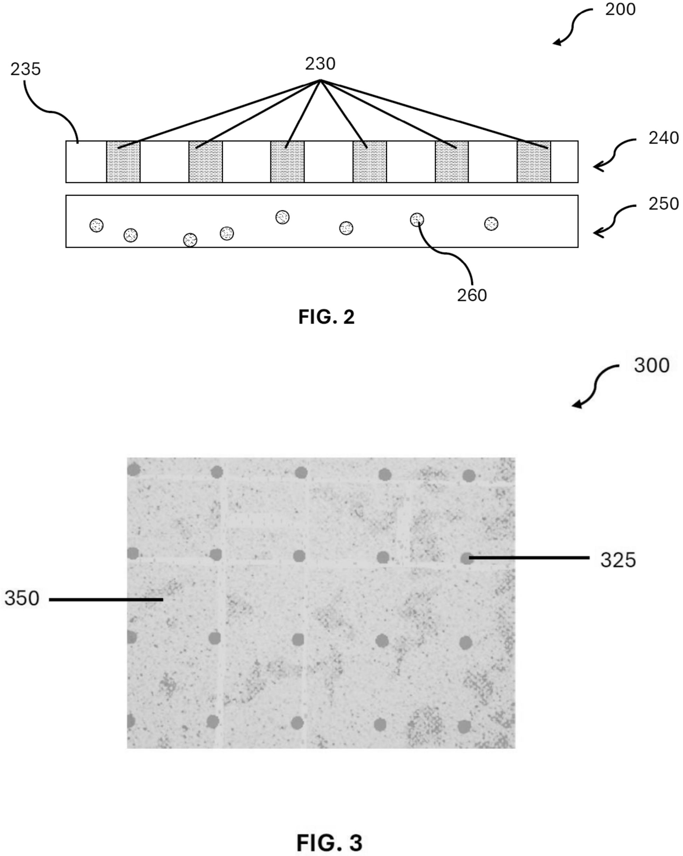

FIG. 2 is a schematic illustration showing a porous barrier layer supporting tape 200 including a porous adhesive layer 240 disposed over a porous substrate 250. The porous adhesive layer 240 includes pores 230 positioned between an adhesive material 235. The porous substrate 250 may include pores 260 to allow for ion transport and gas permeability.

FIG. 3 is an image showing non-porous 325 and porous 350 areas of a porous adhesive layer 300. As shown in FIG. 3, the porous adhesive layer 300 includes an adhesive coating patterned as a grid of dots, wherein the dots indicate non-porous 325 areas and surrounding areas indicate porous 350 areas.

In some embodiments, an adhesive layer (e.g., without pores) is a continuous film. In some embodiments, the porous adhesive layer is a non-continuous film (e.g., porous adhesive layer includes porous areas and non-porous areas).

In some embodiments, the porous adhesive layer comprises a porous adhesive layer thickness of, of about, of at least, of at least about, of at most, or of at most about, 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm and 10 µm, or any range of values therebetween. In some embodiments, the porous substrate comprises a porous substrate thickness of, of about, of at least, of at least about, of at most, or of at most about, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm and 25 µm, or any range of values therebetween.

In some embodiments, the porous barrier layer supporting tape comprises a peel strength or an adhesion strength of, of about, of at least, or of at least about, 150 N/m, 155 N/m, 160 N/m, 165 N/m, 170 N/m, 175 N/m, 180 N/m, 185 N/m, 190 N/m, 195 N/m, 200 N/m, 205 N/m, 210 N/m, 215 N/m, 220 N/m, 225 N/m, 230 N/m, 235 N/m, 240 N/m, 245 N/m, 250 N/m, 255 N/m, 260 N/m, 265 N/m, 270 N/m, 275 N/m, 280 N/m, 285 N/m, 290 N/m, 295 N/m and 300 N/m, or any range of values therebetween. In some embodiments, the porous barrier layer supporting tape comprises a peel strength or an adhesion strength of at least about 200 N/m.

In some embodiments, the porous barrier layer supporting tape comprises a wear resistance able to withstand a certain amount of compression cycles without shorting (e.g., shorting with a custom blade-like tip). In some embodiments, the porous barrier layer supporting tape comprises a wear resistance of, of about, of at least, or of at least about, 500 compression cycles, 550 compression cycles, 600 compression cycles, 650 compression cycles, 700 compression cycles, 750 compression cycles, 800 compression cycles, 850 compression cycles, 900 compression cycles, 950 compression cycles, 1000 compression cycles, 1050 compression cycles, 1100 compression cycles, 1150 compression cycles, 1200 compression cycles, 1250 compression cycles, 1300 compression cycles, 1350 compression cycles, 1400 compression cycles, 1450 compression cycles, 1500 compression cycles, 1550 compression cycles, 1600 compression cycles, 1650 compression cycles, 1700 compression cycles, 1750 compression cycles, 1800 compression cycles, 1850 compression cycles, 1900 compression cycles and 2000 compression cycles, or any range of values therebetween. In some embodiments, the porous barrier layer supporting tape comprises a wear resistance of at least about 1000 compression cycles.

In some embodiments, the porous barrier layer supporting tape comprises a puncture strength of, of about, of at least, or of at least about, 3 N, 4 N, 5 N, 6 N, 7 N, 8 N, 9 N, 10 N, 11 N, 12 N, 13 N, 14 N and 15 N, or any range of values therebetween. In some embodiments, the porous barrier layer supporting tape comprises a puncture strength of at least about 5 N. In some embodiments, the porous barrier layer supporting tape comprises a puncture strength of about 7-8.5 N.

Air permeability rate may be measured in s/cc or s/cm³. In some embodiments, the porous barrier layer supporting tape comprises air permeability rate of, of about, of at most, or of at most about, 400 s/100 cc, 395 s/100 cc, 390 s/100 cc, 385 s/100 cc, 380 s/100 cc, 375 s/100 cc, 370 s/100 cc, 365 s/100 cc, 360 s/100 cc, 355 s/100 cc, 350 s/100 cc, 345 s/100 cc, 340 s/100 cc, 335 s/100 cc, 330 s/100 cc, 325 s/100 cc, 320 s/100 cc, 315 s/100 cc, 310 s/100 cc, 305 s/100 cc, 300 s/100 cc, 295 s/100 cc, 290 s/100 cc, 285 s/100 cc, 280 s/100 cc, 275 s/100 cc, 270 s/100 cc, 265 s/100 cc, 260 s/100 cc, 255 s/100 cc, 250 s/100 cc, 245 s/100 cc, 240 s/100 cc, 235 s/100 cc, 230 s/100 cc, 225 s/100 cc, 220 s/100 cc, 215 s/100 cc, 210 s/100 cc, 205 s/100 cc, 200 s/100 cc, 195 s/100 cc, 190 s/100 cc, 185 s/100 cc, 180 s/100 cc, 175 s/100 cc, 170 s/100 cc, 165 s/100 cc, 160 s/100 cc, 155 s/100 cc, 150 s/100 cc, 145 s/100 cc, 140 s/100 cc, 135 s/100 cc, 130 s/100 cc, 125 s/100 cc, 120 s/100 cc, 115 s/100 cc, 110 s/100 cc, 105 s/100 cc, 100 s/100 cc, 95 s/100 cc, 90 s/100 cc, 85 s/100 cc, 80 s/100 cc, 75 s/100 cc, 70 s/100 cc, 65 s/100 cc, 60 s/100 cc, 55 s/100 cc, 50 s/100 cc, 45 s/100 cc, 40 s/100 cc, 35 s/100 cc, 30 s/100 cc, 25 s/100 cc, 20 s/100 cc, 15 s/100 cc, 10 s/100 cc and 5 s/100 cc, or any range of values therebetween. In some embodiments, the porous barrier layer supporting tape comprises air permeability rate of at most about 300 s/100 cc. In some embodiments, the porous barrier layer supporting tape comprises air permeability rate of at most about 250 s/100 cc.

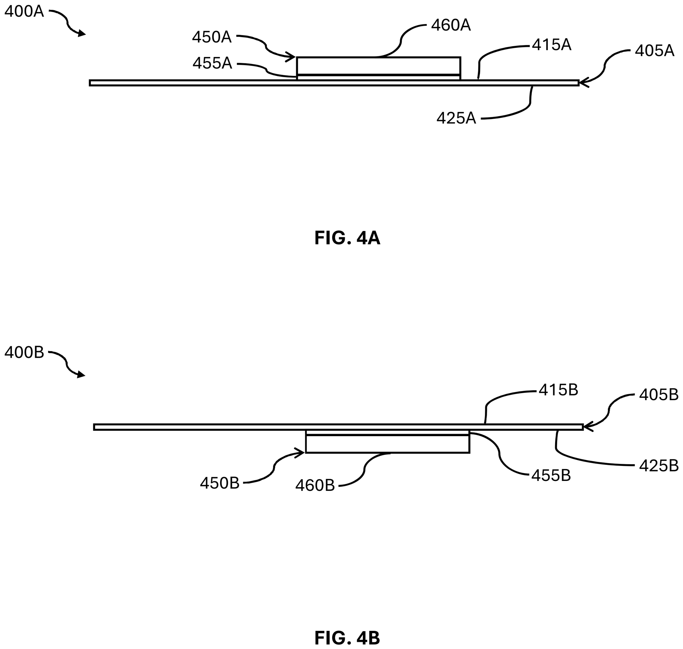

FIGS. 4A and 4B are schematic illustrations showing porous barrier layer supporting tapes 450A, 450B disposed over separators 405A, 405B, respectively, in various configurations 400A, 400B. As shown in FIG. 4A, the first configuration 400A includes a separator 405A, a cathode facing surface 415A and an anode facing surface 425A of the separator 405A. The first configuration 400A further includes a porous barrier layer supporting tape 450A positioned along a length of the separator 405A. The porous barrier layer supporting tape 450A includes a porous adhesive layer 455A disposed over the cathode facing surface 415A of the separator 405A. The porous barrier layer supporting tape 450A also includes a porous substrate 460A disposed over a length side of the porous adhesive layer 455A opposite the cathode facing surface 415A.

As shown in FIG. 4B, the second configuration 400B includes a separator 405B, a cathode facing surface 415B and an anode facing surface 425B of the separator 405B. The second configuration 400B further includes a porous barrier layer supporting tape 450B positioned along a length of the separator 405B. The porous barrier layer supporting tape 450B includes a porous adhesive layer 455B disposed over the anode facing surface 425B of the separator 405B. The porous barrier layer supporting tape 450B also includes a porous substrate 460B disposed over a length side of the porous adhesive layer 455B opposite the anode facing surface 425B.

In some embodiments, the porous adhesive layer is disposed over the cathode facing surface of the separator. In some embodiments, the porous adhesive layer is disposed over the anode facing surface of the separator. In some embodiments, the porous barrier layer supporting tape may include aspects of a separator without having to be disposed over the separator (e.g., the porous barrier layer supporting tape may not be required to be disposed over the separator). In some embodiments, the porous barrier layer supporting tape may be the separator.

In some embodiments, the one or more porous barrier layer supporting tapes may be disposed on the cathode facing surface of the separator. In some embodiments, the one or more porous barrier layer supporting tape may be disposed on the anode facing surface of the separator. In some embodiments, the porous barrier layer supporting tapes may be disposed on the separator such that the porous barrier layer supporting tapes are not in contact and/or overlapping each other. In some embodiments, the porous barrier layer supporting tape may be tapered. In some embodiments, an edge of the porous barrier layer supporting tape may be tapered. In some embodiments, the porous barrier layer supporting tape may be perforated to reduce the weight of the electrode assembly and/or energy storage device and to assist gas and/or electrolyte flow.

In some embodiments, a ceramic coating may be disposed over the separator. In some embodiments, the ceramic coating may comprise pores (e.g., a porous ceramic coating). In some embodiments, the ceramic coating may be disposed over any one of a length side of the separator. In some embodiments, the ceramic coating may be disposed over both length sides of the separator. In some embodiments, the separator may be porous (e.g., a porous separator). In some embodiments, the separator may include the ceramic coating.

In some embodiments, the separator may comprise a porosity of, of about, of at least, of at most, of at least about, or of at most about, 20%, 25%, 30%, 35%, 40%, 45%, 50%, 55%, 60% and 65%, or any range of values therebetween. In some embodiments, the separator may comprise a porosity of about 25-65%.

In some embodiments, the separator may comprise an air permeability rate of, of about, of at least, of at most, of at least about, or of at most about, 325 s/100 cc, 320 s/100 cc, 315 s/100 cc, 310 s/100 cc, 305 s/100 cc, 300 s/100 cc, 295 s/100 cc, 290 s/100 cc, 285 s/100 cc, 280 s/100 cc, 275 s/100 cc, 270 s/100 cc, 265 s/100 cc, 260 s/100 cc, 255 s/100 cc, 250 s/100 cc, 245 s/100 cc, 240 s/100 cc, 235 s/100 cc, 230 s/100 cc, 225 s/100 cc, 220 s/100 cc, 215 s/100 cc, 210 s/100 cc, 205 s/100 cc, 200 s/100 cc, 195 s/100 cc, 190 s/100 cc, 185 s/100 cc, 180 s/100 cc, 175 s/100 cc, 170 s/100 cc, 165 s/100 cc, 160 s/100 cc, 155 s/100 cc, 150 s/100 cc, 145 s/100 cc, 140 s/100 cc, 135 s/100 cc, 130 s/100 cc, 125 s/100 cc, 120 s/100 cc, 115 s/100 cc, 110 s/100 cc, 105 s/100 cc and 100 s/100 cc, or any range of values therebetween. In some embodiments, the separator may comprise an air permeability rate of about 100-300 s/100cc.

In some embodiments, the separator may comprise a separator thickness of, of about, of at least, of at most, of at least about, or of at most about, 2 µm, 4 µm, 6 µm, 8 µm, 10 µm, 12 µm, 14 µm, 16 µm, 18 µm, 20 µm, 22 µm, 24 µm, 26 µm, 28 µm, 30 µm, 32 µm, 34 µm, 36 µm, 38 µm, 40 µm, 42 µm, 44 µm, 46 µm, 48 µm, 50 µm, 52 µm, 54 µm, 56 µm, 58 µm and 60 µm, or any range of values therebetween. In some embodiments, the separator may comprise a separator thickness of about 5-50 µm.

In some embodiments, the ceramic coating may comprise a ceramic coating thickness of, of about, of at least, of at most, of at least about, or of at most about, 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm and 12 µm, or any range of values therebetween. In some embodiments, the ceramic coating may comprise a ceramic coating thickness of about 1-10 µm.

In some embodiments, the ceramic coating may comprise ceramic coating particles having a D₅₀ particle size distribution of, of about, of at least, of at most, of at least about, or of at most about, 0.2 µm, 0.4 µm, 0.6 µm, 0.8 µm, 1 µm, 1.2 µm, 1.4 µm, 1.6 µm, 1.8 µm, 2 µm, 2.2 µm, 2.4 µm, 2.6 µm, 2.8 µm, 3 µm, 3.2 µm, 3.4 µm, 3.6 µm, 3.8 µm, 4 µm, 4.2 µm, 4.4 µm, 4.6 µm, 4.8 µm and 5 µm, or any range of values therebetween. In some embodiments, the ceramic coating may comprise ceramic coating particles having a D₅₀ particle size distribution of about 0.2-3 µm.

In some embodiments, the ceramic coating may comprise a binder having a binder content of, of about, of at least, of at most, of at least about, or of at most about, 1 wt.%, 2 wt.%, 3 wt.%, 4 wt.%, 5 wt.%, 6 wt.%, 7 wt.%, 8 wt.%, 9 wt.%, 10 wt.%, 11 wt.%, 12 wt.%, 13 wt.%, 14 wt.%, 15 wt.%, 16 wt.%, 17 wt.%, 18 wt.%, 19 wt.%, 20 wt.%, 21 wt.%, 22 wt.%, 23 wt.%, 24 wt.% and 25 wt.%, or any range of values therebetween. In some embodiments, the ceramic coating may comprise a binder having a binder content of about 1-20 wt.%

In some embodiments, the ceramic coating may comprise a binder having a glass transition temperature of, of about, of at least, of at most, of at least about, or of at most about, -50°C, -45°C, -40°C, -35°C, -30°C, -25°C, -20°C, -15°C, -10°C, -5°C, 0°C, 5°C, 10°C, 15°C, 20°C, 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, 140°C, 145°C, 150°C, 155°C, 160°C, 165°C, 170°C, 175°C, 180°C, 185°C, 190°C, 195°C, 200°C, 205°C, 210°C, 215°C, 220°C, 225°C, 230°C, 235°C, 240°C and 250°C, or any range of values therebetween. In some embodiments, the ceramic coating may comprise a binder having a glass transition temperature of the binder of about -50-250°C.

### Electrode Assemblies Including the Porous Barrier Layer Supporting Tapes

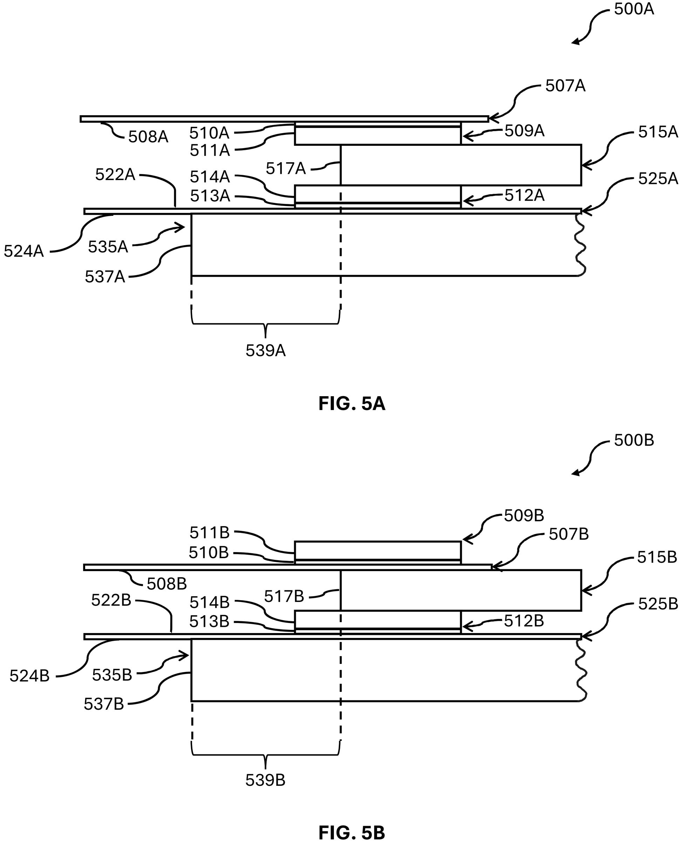

FIGS. 5A and 5B are schematic illustration showing electrode assemblies 500A, 500B including porous barrier layer supporting tapes 509A, 509B, 512A, 512B in various configurations. An electrode assembly that includes a cathode, an anode and a porous barrier layer supporting tape may be produced or formed in various configurations. For example, FIG. 5A is a schematic illustration of an electrode assembly 500A. As shown in FIG. 5A, the electrode assembly 500A includes a first separator 507A, a cathode 515A and an anode 535A. The electrode assembly 500A further includes a first porous barrier layer supporting tape 509A. The first porous barrier layer supporting tape 509A includes a porous adhesive layer 510A disposed over a cathode facing surface 508A of the first separator 507A. The first porous barrier layer supporting tape 509A also includes a porous substrate 511A disposed over a side of the porous adhesive layer 510A opposite the cathode facing surface 508A of the first separator 507A. The electrode assembly 500A also includes a second separator 525A and a second porous barrier layer supporting tape 512A. The second separator 525A includes a cathode facing surface 522A and an anode facing surface 524A. The second porous barrier layer supporting tape 512A includes a porous adhesive layer 513A disposed over the cathode facing surface 522A of the second separator 525A. The second porous barrier layer supporting tape 509A also includes a porous substrate 514A disposed over a side of the porous adhesive layer 513A opposite the cathode facing surface 522A of the second separator 525A. The cathode 515A includes a cathode leading edge 517A and is disposed between the first porous barrier layer supporting tape 509A and the second porous barrier layer supporting tape 512A. The anode 535A disposed over the second separator 525A includes an anode leading edge 537A and an anode overhang area 539A measured by a distance between the anode leading edge 537A and the cathode leading edge 517A.

FIG. 5B is another schematic illustration of an electrode assembly 500B. As shown in FIG. 5B, the electrode assembly 500B includes a cathode 515B and an anode 535B. The electrode assembly 500B further includes a first separator 507B and a first porous barrier layer supporting tape 509B. The first porous barrier layer supporting tape 509B includes a porous adhesive layer 510B disposed over a side of the first separator 507B opposite the cathode facing surface 508B. The first porous barrier layer supporting tape 509B also includes a porous substrate 511B disposed over a side of the porous adhesive layer 510B opposite the first separator 507B. The electrode assembly 500B also includes a second separator 525B and a second porous barrier layer supporting tape 512B. The second separator 525B includes a cathode facing surface 522B and an anode facing surface 524B. The second porous barrier layer supporting tape 512B includes a porous adhesive layer 513B disposed over the cathode facing surface 522B of the second separator 525B. The second porous barrier layer supporting tape 509B also includes a porous substrate 514B disposed over a side of the porous adhesive layer 513B opposite the cathode facing surface 522B of the second separator 525B. The cathode 515B includes a cathode leading edge 517B and is disposed between the first separator 507B and the second porous barrier layer supporting tape 512B. The anode 535B disposed over the second separator 525B includes an anode leading edge 537B and an anode overhang area 539B measured by a distance between the anode leading edge 537B and the cathode leading edge 517B.

In some embodiments, any one of the porous barrier layer supporting tapes are aligned with an anode leading edge (e.g., leading edge of the anode) and/or a cathode leading edge (e.g., leading edge of the cathode). In some embodiments, any one of the porous barrier layer supporting tapes may be disposed between the anode and the cathode, between the first separator and the anode, between the first separator and the cathode, between the second separator and the anode, between the second separator and the cathode, and between the first separator and the second separator. In some embodiments, any one of the porous barrier layer supporting tapes may be disposed on any one component of the electrode assembly. For example, in some embodiments, the porous barrier layer supporting tape is disposed on at least one of the anode, the cathode, the first separator, the second separator, and combinations thereof. In some embodiments, the electrode assembly may include a single porous barrier layer supporting tape. In some embodiments, any one of the porous barrier layer supporting tapes may extend at least a length of an electrode in an electrode assembly such that the porous barrier layer supporting tape is not disposed over a separator and/or other components of the electrode assembly.

### Method to Form Electrode Assemblies

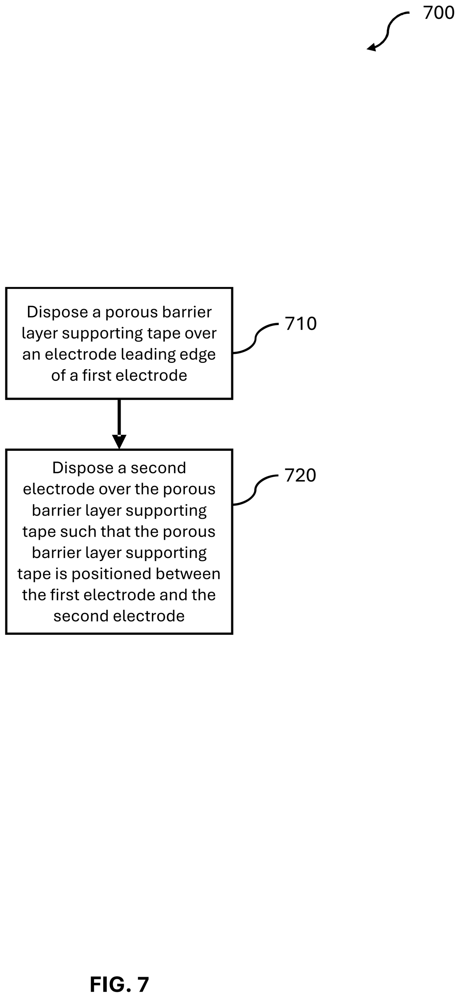

FIG. 7 is a flowchart showing a method 700 of forming an electrode assembly. As illustrated in FIG. 7, a porous barrier layer supporting tape is disposed over an electrode leading edge of a first electrode in step 710. In step 720, a second electrode is disposed over the porous barrier layer supporting tape such that the porous barrier layer supporting tape is positioned between the first electrode and the second electrode.

In some embodiments, porous barrier layer supporting tape includes a porous adhesive layer and a porous substrate. In some embodiments, the method further includes disposing the porous adhesive layer directly over the porous substrate. In some embodiments, the method further includes disposing the porous adhesive layer over the porous substrate to form the porous barrier layer supporting tape.

In some embodiments, the method further includes coating the porous substrate to form a partial adhesive coating selected from the group consisting of gravure, flexographic coating, slot die coating, spray adhesive coating, ink jet adhesive coating, or combinations thereof. In some embodiments, disposing the porous adhesive layer over the porous substrate further includes a deposition process selected from the group consisting of direct rotogravure, indirect rotogravure, flexographic coating, slot die coating, comma coating, spray coating, ink-jet coating, or combinations thereof. In some embodiments, the method further includes disposing the porous barrier layer supporting tape over a separator.

### Electrode Film Materials and Electrode Films

Electrode film mixtures and electrode films formed using materials are described herein. In some embodiments, components of an active layer or electrode film may comprise particles, such as a composite material. The particles for forming the active layer or electrode film may be combined with a material to provide an electrode film mixture. In some embodiments, the active layer or electrode film may be formed from the electrode film mixture such that weight percentages of the components of the active layer or electrode film and weight percentages of the components of the electrode film mixture are substantially the same.

An active material (e.g., cathode active material, anode active material) may be used in the preparation of an electrode film and/or electrode for an energy storage device.

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., LiFePO₄ or "LFP"), lithium manganese iron phosphate (e.g., LiMn_{0.6}Fe_{0.4}PO₄ or "LMFP"), lithium nickel manganese cobalt oxide (i.e., LiNiₓMn_{y}Co_{1-x-y}O₂ or "NMC"), lithium nickel cobalt aluminum oxide (i.e., LiNiₓCo_{y}Al_{z}O₂ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include LiFePO₄ (i.e., "lithium iron phosphate" and "LFP") and LiMn₁₋ₓFeₓPO₄ (i.e., "lithium manganese iron phosphate" and "LMFP") (e.g., LiMn_{0.6}Fe_{0.4}PO₄ or LiMn_{0.8}Fe_{0.2}PO₄). In some embodiments, the iron phosphate-based active material includes LFP. In some embodiments, the iron phosphate-based active material includes an LMFP. In some embodiments, the iron phosphate-based active material includes an LFP and/or an LMFP. In some embodiments, the cathode active material is a polycrystal, a single crystal, or combinations thereof.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the electrode film mixture and/or the electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, an electrode film mixture and/or an electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, an electrode film mixture and/or an electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the conductive carbon additive comprises carbon black and/or carbon nanotubes. In some embodiments, the conductive additive is selected from a conductive carbon, a carbon nanotube, and combinations thereof. In some embodiments, the carbon nanotube is selected from a single-walled carbon nanotube (SWCNT), multi-walled carbon nanotube (MWCNT), a few-walled carbon nanotube (FWCNT), and combinations thereof. In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additives is in an amount of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, 0.09 wt.%, 0.08 wt.%, 0.07 wt.%, 0.06 wt.%, 0.05 wt.%, 0.04 wt.%, 0.03 wt.%, 0.02 wt.%, 0.01 wt.% of the electrode film, or any range of values therebetween. In some embodiments, the conductive additive is carbon black.

In some embodiments, the electrode film includes a binder or binder material. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), acrylic, acrylamide, polyvinylpyrrolidone (PVP), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In some embodiments, the binder comprises a cellulosic binder. In certain embodiments, the binder comprises, consists essentially, or consists of a single fibrillizable and/or fibrillized binder, such as PTFE. In some embodiments, the electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the electrode film is substantially absent or absent of solvent residue. In some embodiments, the resulting active layer or electrode films are self-supporting films formed using the dry process from the dry particle mixture. In some embodiments, the resulting active layer or electrode films are freestanding films formed using the dry process from the dry particle mixture. A process for forming an active layer or electrode film can include fibrillizing the fibrillizable binder component(s) such that the film comprises fibrillized binder. In further embodiments, a freestanding active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, the binder is combined with the active material and calendered to form the electrode film. In some embodiments, the binder is combined with the active material and calendered without use of solvents to form the dry electrode film. In some embodiments, forming the electrode film includes calendering, pressing, and/or laminating the electrode film mixture.

In some embodiments, an electrode film is disposed on a current collector to form an electrode. In some embodiments, a current collector can include a metallic material, such as a material comprising aluminum, nickel, copper, or combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween.

### Electrodes and Energy Storage Devices

An energy storage system or device includes a positive electrode (i.e., cathode), a negative electrode (i.e., anode), a separator and/or a porous barrier layer supporting tape disposed therebetween, and an electrolyte positioned within a housing. Each electrode includes an electrode film disposed over a current collector. The electrode includes an electrode film disposed over a current collector. In some embodiments, the current collector is a foil. In some embodiments, the current collector is aluminum foil, a copper foil, or combinations thereof. In some embodiments, a current collector can include a metallic material, such as a material comprising aluminum, nickel, copper, or combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween. In some embodiments, an active layer is disposed on each side of the current collector.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, the electrode (e.g., anode, cathode) comprises a stiffness of, of about, of at least, or of at least about, 2 GPa, 4 GPa, 6 GPa, 8 GPa, 10 GPa, 12 GPa, 14 GPa, 16 GPa, 18 GPa, 20 GPa, 22 GPa, 24 GPa, 26 GPa, 28 GPa, 30 GPa, 32 GPa, 34 GPa, 36 GPa, 38 GPa, 40 GPa, 42 GPa, 44 GPa, 46 GPa, 48 GPa, 50 GPa, 52 GPa, 54 GPa, 56 GPa, 58 GPa, 60 GPa, 62 GPa, 64 GPa, 66 GPa, 68 GPa, 70 GPa, 72 GPa, 74 GPa, 76 GPa, 78 GPa, 80 GPa, 82 GPa, 84 GPa, 86 GPa, 88 GPa, 90 GPa, 92 GPa, 94 GPa, 96 GPa, 98 GPa, 100 GPa, 102 GPa, 104 GPa, 106 GPa, 108 GPa, 110 GPa, 112 GPa, 114 GPa, 116 GPa, 118 GPa, 120 GPa, 122 GPa, 124 GPa, 126 GPa, 128 GPa, 130 GPa, 132 GPa, 134 GPa, 136 GPa, 138 GPa, 140 GPa, 142 GPa, 144 GPa, 146 GPa, 148 GPa, 150 GPa, 152 GPa, 154 GPa, 156 GPa, 158 GPa, 160 GPa, 162 GPa, 164 GPa, 166 GPa, 168 GPa, 170 GPa, 172 GPa, 174 GPa, 176 GPa, 178 GPa, 180 GPa, 182 GPa, 184 GPa, 186 GPa, 188 GPa, 190 GPa, 192 GPa, 194 GPa, 196 GPa, 198 GPa, 200 GPa, 202 GPa, 204 GPa, 206 GPa, 208 GPa, 210 GPa, 212 GPa, 214 GPa, 216 GPa, 218 GPa, 220 GPa, 222 GPa, 224 GPa, 226 GPa, 228 GPa, 230 GPa, 232 GPa, 234 GPa, 236 GPa, 238 GPa, 240 GPa, 242 GPa, 244 GPa, 246 GPa, 248 GPa, 250 GPa, 252 GPa, 254 GPa, 256 GPa, 258 GPa, 260 GPa, 262 GPa, 264 GPa, 266 GPa, 268 GPa, 270 GPa, 272 GPa, 274 GPa, 276 GPa, 278 GPa, 280 GPa, 282 GPa, 284 GPa, 286 GPa, 288 GPa, 290 GPa, 292 GPa, 294 GPa, 296 GPa, 298 GPa and 300 GPa, or any range of values therebetween. In some embodiments, the electrode (e.g., anode, cathode) comprises a stiffness of at least about 2 GPa.

In some embodiments, the energy storage device comprises a separator and/or a porous barrier layer supporting tape, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator and/or a porous barrier layer supporting tape, an anode electrode and the cathode electrode described herein within a housing, wherein the separator and/or a porous barrier layer supporting tape is placed between the anode electrode and the cathode electrode.

An electrode assembly includes a cathode, an anode, and a separator and/or a porous barrier layer supporting tape positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

A wound electrode assembly may include winding or rolling the electrode assembly, where a first electrode and a second electrode and the porous barrier layer supporting tape are wound or rolled about a central axis to form an inner diameter surface surrounding a cylindrical void (e.g., space in the middle of the wound electrode assembly). In some embodiments, the porous barrier layer supporting tape is physically contacting the first electrode and the second electrode.

The wound electrode assembly may be formed by positioning a porous barrier layer supporting tape between a first electrode and a second electrode and winding the porous barrier layer supporting tape, the first electrode and the second electrode about an axis (e.g., a central axis) to form an inner diameter surface of the electrode assembly surrounding a cylindrical void.

The normalized circularity may be used to determine and/or correlate to a relatively weak core spot (e.g., a spot that may cause electrode buckling) in the wound electrode assembly. Normalized circularity for a nonideal spiral is defined as the minimum ratio between the nonideal (real) geometry versus ideal geometry on a point-by-point basis according to the equation below. $Normalized Circularity = {min}_{i = 1 , 2 , .. , n} \left(\frac{Nonideal Spiral Geometry}{Ideal Spiral Geometry}\right)$

The nonideal (real) spiral geometry is given by measured Cartesian and polar coordinates (*x, y, θ, r*) and the ideal spiral geometry is derived from an Archimedean spiral according to *r* = *αθ + β.* The geometry of a spiral (ideal or nonideal) can be characterized by curvature (K), such as the polar curvature parameterization below. $K \left(θ\right) = \frac{\left|{r}^{2}+2r{′}^{2}-rr"\right|}{{\left({r}^{2}+r{′}^{2}\right)}^{3 / 2}}$

In some embodiments, the electrode assembly comprises a normalized circularity value of, of about, of at least, or of at least about, 0.7, 0.705, 0.71, 0.715, 0.72, 0.725, 0.73, 0.735, 0.74, 0.745, 0.75, 0.76, 0.77, 0.78, 0.79, 0.8, 0.805, 0.81, 0.815, 0.82, 0.825, 0.83, 0.835, 0.84, 0.845, 0.85, 0.86, 0.87, 0.88, 0.89, 0.90, 0.91, 0.92, 0.93, 0.94, 0.95, 0.96, 0.97, 0.98, 0.99, 1, 1.05, 1.1, 1.15, 1.2 or any range of values therebetween.

The electrode (e.g., cathode, anode) disclosed herein may be used for an energy storage device. In some embodiments, the energy storage device comprises a separator and/or a porous barrier layer supporting tape, an anode electrode, the cathode electrode, an electrolyte, and a housing, wherein the electrolyte, separator and/or a porous barrier layer supporting tape, anode electrode and cathode electrode are disposed within the housing and the separator and/or a porous barrier layer supporting tape is positioned between the anode and cathode electrodes. In some embodiments, an energy storage device is formed by placing an electrolyte, a separator and/or a porous barrier layer supporting tape, an anode electrode and the cathode electrode described herein within a housing, wherein the separator and/or a porous barrier layer supporting tape is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable electrolyte (e.g., lithium-containing electrolyte). For example, the energy storage device can include a lithium salt, and a solvent, such as a non-aqueous or organic solvent. Generally, the lithium salt includes an anion that is redox stable. In some embodiments, the anion can be monovalent. In some embodiments, the salt is a lithium salt. In some embodiments, a lithium salt can be selected from lithium hexafluorophosphate (LiPF₆), lithium bis(trifluoromethanesulfonyl)imide (LiTFSI), lithium tetrafluoroborate (LiBF₄), lithium perchlorate (LiClO₄), lithium bis(trifluoromethansulfonyl)imide (LiN(SO₂CF₃)₂), lithium trifluoromethansulfonate (LiSO₃CF₃), lithium bis(oxalato)borate (LiB(C₂O₄)₂), lithium bis(fluorosulfonyl)imide (LiN(SO₂F)₂ ("LiFSI")), lithium difluoro(oxalato)borate (LiC₂BF₂O₄), lithium difluorophosphate (LiDFP), lithium bis(oxalate)borate (LiBOB), lithium difluoro(bisoxalato)phosphate (LiDFOP), and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween. In some embodiments, salts are utilized as additives in the electrolyte system, and can be used at individual or total concentration of, of about, of at most, or at most about, 0.1 wt.%, 0.2 wt.%, 0.3 wt.%, 0.4 wt.%, 0.5 wt.%, 0.6 wt.%, 0.7 wt.%, 0.8 wt.%, 0.9 wt.%, 1 wt.%, 1.1 wt.%, 1.2 wt.%, 1.3 wt.%, 1.4 wt.%, 1.5 wt.%, 1.6 wt.%, 1.7 wt.%, 1.8 wt.%, 1.9 wt.%, 2 wt.%, 2.1 wt.%, 2.2 wt.%, 2.3 wt.%, 2.4 wt.%, 2.5 wt.%, 2.6 wt.%, 2.7 wt.%, 2.8 wt.%, 2.9 wt.%, 3 wt.%, 4 wt.%, 5 wt.%, 6 wt.%, 7 wt.%, 8 wt.%, 9 wt.% or 10 wt.%, or any range of values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a liquid solvent and/or a liquid co-solvent can include one or more functional groups selected from dioxathiolane (e.g., 1,3,2-dioxathiolane-2,2-dioxide (i.e., "DTD")), carbonates, ethers and/or esters. In some embodiments, the liquid solvent and/or the liquid co-solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the liquid solvent and/or the liquid co-solvent can comprise an ester. In some embodiments, the ester is selected from methyl acetate (MA), methyl propionate (MP), ethyl acetate (EA), methyl butyrate (MB), and combinations thereof. In some embodiments, the liquid solvent and/or liquid co-solvent can comprise an acetate. In some embodiments, the acetate is selected from methyl acetate (MA), ethyl acetate (EA), and combinations thereof. In some embodiments, the liquid solvent and/or liquid co-solvent can comprise a nitrile (e.g., acetonitrile ("AN")). In some embodiments, the liquid solvent and/or liquid co-solvent may include EC, PC, VEC, VC, FEC, DMC, DEC, EMC, MA, MP, EA, MB, DTD, PRS, acetonitrile, and combinations thereof. In some embodiments, the liquid solvent and/or liquid co-solvent may include EC, DMC, DEC, EMC, MA, and combinations thereof. In some embodiments, the liquid solvent and/or liquid co-solvent may include EC, DMC, EMC, and combinations thereof. In some embodiments, the liquid solvent and/or liquid co-solvent may include a ratio of EC:DMC:EMC of 10-30:0-90:0-70.

In some embodiments, one or more solvents can be used at a concentration of, of about, of at least, or at least about, 30 wt.%, 35 wt.%, 40 wt.%, 45 wt.%, 50 wt.%, 55 wt.%, 60 wt.%, 65 wt.%, 70 wt.%, 75 wt.%, 80 wt.%, 85 wt.% or 90 wt.%, or any range of values therebetween. In some embodiments, solvents are utilized as additives in the electrolyte system, and can be used at a concentration of, of about, of at most, or at most about, 0.1 wt.%, 0.2 wt.%, 0.3 wt.%, 0.4 wt.%, 0.5 wt.%, 0.6 wt.%, 0.7 wt.%, 0.8 wt.%, 0.9 wt.%, 1 wt.%, 1.1 wt.%, 1.2 wt.%, 1.3 wt.%, 1.4 wt.%, 1.5 wt.%, 1.6 wt.%, 1.7 wt.%, 1.8 wt.%, 1.9 wt.%, 2 wt.%, 2.1 wt.%, 2.2 wt.%, 2.3 wt.%, 2.4 wt.%, 2.5 wt.%, 2.6 wt.%, 2.7 wt.%, 2.8 wt.%, 2.9 wt.%, 3 wt.%, 4 wt.%, 5 wt.%, 6 wt.%, 7 wt.%, 8 wt.%, 9 wt.% or 10 wt.%, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments, where there is no, or is substantially no, overlap and/or intermingling of the separator and/or the porous barrier layer supporting tape and the shaped electrode film (e.g., cathode electrode film), the boundary of the shaped electrode film is easier to identify and therefore improves the ability to form a counter electrode (e.g., anode electrode) with an overhang.

A method of preparing a rolled electrode assembly may include preparing an electrode assembly and rolling the electrode assembly to form a rolled electrode assembly. The method of forming an energy storage device may include preparing the rolled electrode assembly and disposing the rolled electrode assembly and an electrolyte within a housing.

### EXAMPLES

Example embodiments of the present disclosure, including processes, materials and/or resultant products, are described in the following examples.

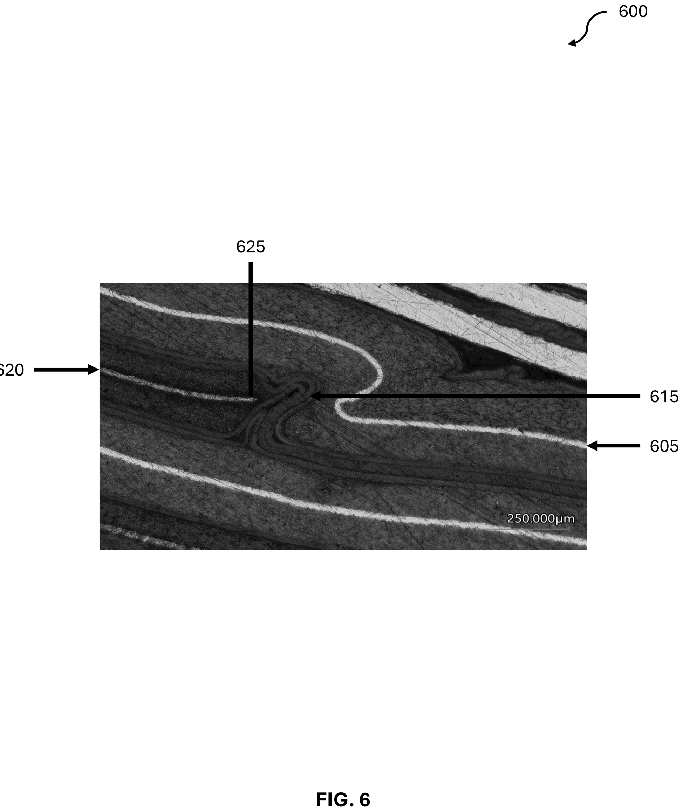

As shown in FIG. 6, a portion of a rolled electrode assembly 600 is magnified on a leading edge of the cathode 625. The rolled electrode assembly 600 includes an anode 605 and a porous barrier layer supporting tape 615 disposed between the anode 605 and a cathode 620, protecting the rolled electrode assembly from punctures and short circuiting of the electrodes.

While certain embodiments of the inventions have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure. Accordingly, the scope of the present inventions is defined only by reference to the appended claims.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

## Claims

1. An electrode assembly, comprising:
a first electrode, wherein the first electrode comprises an electrode leading edge;
a second electrode; and
a porous barrier layer supporting tape positioned between the first electrode and the second electrode, wherein the porous barrier layer supporting tape comprises:
a porous adhesive layer; and
a porous substrate;
wherein the porous adhesive layer is disposed over the porous substrate.

2. The electrode assembly of claim 1, wherein the porous barrier layer supporting tape is disposed over the electrode leading edge.

3. The electrode assembly of claim 1 or 2, wherein the porous barrier layer supporting tape comprises one or more features selected from: (i) an air permeability rate of at most about 300 s/100 cc; (ii) a puncture strength of about 7-8.5 N, and (iii) a peel strength of at least about 200 N/m.

4. The electrode assembly of any one of claims 1-3, wherein the porous barrier layer supporting tape further comprises one or both of: (i) a porous intermediary layer disposed between the porous adhesive layer and the porous substrate; and (ii) a porous layer disposed over the porous substrate on a side opposite the porous adhesive layer.

5. The electrode assembly of any one of claims 1-4, wherein the porous adhesive layer comprises an adhesive material selected from the group consisting of acrylic, silicon rubber, acrylamide, polyolefin, polyolefin-based resins, polyolefin-based resins with polar group modifications, or combinations thereof.

6. The electrode assembly of any one of claims 1-5, wherein the porous adhesive layer is a non-continuous film.

7. The electrode assembly of any one of claims 1-6, wherein the porous adhesive layer has a porous adhesive layer thickness of about 1 µm to about 5 µm.

8. The electrode assembly of any one of claims 1-7, wherein the porous substrate has a porous substrate thickness of about 15 µm to about 20 µm.

9. The electrode assembly of any one of claims 1-8, wherein the porous barrier layer supporting tape comprises a wear resistance of at least about 1000 compression cycles.

10. The electrode assembly of any one of claims 1-9, further comprising a separator disposed between the porous barrier layer supporting tape and the first electrode, wherein the separator has a porosity of about 25-65% and/or a separator thickness of about 5-50 µm.

11. A wound electrode assembly, comprising the electrode assembly of any one of claims 1-10, wherein the first electrode, the second electrode and the porous barrier layer supporting tape are wound about a central axis to form an inner diameter surface surrounding a cylindrical void.

12. The wound electrode assembly of claim 11, wherein the porous barrier layer supporting tape is physically contacting the first electrode and the second electrode.

13. An energy storage device, comprising:
the electrode assembly of any one of claims 1-10 or the wound electrode assembly of claim 11 or 12, wherein the porous barrier layer supporting tape is disposed over and extends beyond the electrode leading edge;
an electrolyte; and
a housing, wherein the electrode assembly or the wound electrode assembly and the electrolyte are disposed within the housing.

14. A method of forming an electrode assembly, comprising:
disposing a porous barrier layer supporting tape over an electrode leading edge of a first electrode, wherein the porous barrier layer supporting tape comprises:
a porous adhesive layer; and
a porous substrate;
wherein the porous adhesive layer is disposed over the porous substrate;
and
disposing a second electrode over the porous barrier layer supporting tape such that the porous barrier layer supporting tape is positioned between the first electrode and the second electrode.

15. The method of claim 14, further comprising disposing the porous adhesive layer over the porous substrate to form the porous barrier layer supporting tape.
